Europäisches Patentamt

**European Patent Office**

**Office européen des brevets**

(11) Publication number: **0 131 283**
**A2**

(12) **EUROPEAN PATENT APPLICATION**

(21) Application number: **84107929.6**

(22) Date of filing: **06.07.84**

(51) Int. Cl.⁴: **G 02 B 6/44**

(30) Priority: **07.07.83 US 511679**

(43) Date of publication of application:
**16.01.85 Bulletin 85/3**

(84) Designated Contracting States:
**DE FR GB**

(71) Applicant: **AUGAT INC.**
**89 Forbes Boulevard**
**Mansfield Massachusetts 02048(US)**

(72) Inventor: **Curado, Len**
**441 Cedar Avenue**
**E. Greenwich Rhode Island 02818(US)**

(74) Representative: **Patentanwälte Dipl.-Ing. R. Holzer**
**Dipl.-Ing. (FH) W. Gallo**
**Philippine-Welser-Strasse 14**
**D-8900 Augsburg(DE)**

(54) **Method and apparatus for anchoring optical cables to optical connectors.**

(57) An anchoring system for optical cables (18) having longitudinally running strength members (22) includes a retainer (16) which slips over the outside shield of the cable, in which the retainer has longitudinally running grooves (30) into which the strength members (22) are reverse bent. The longitudinally running grooves (30) in the retainer (16), in one embodiment, have a depth less than the thickness of the strength members (22) such that when the retainer is inserted into a cap (14), the side walls of the cap compress the strength members (22) into their respective grooves (30). In one embodiment the retainer (16) has an annular lip (32) running about its exterior surface which serves to hold the retainer in the cap (14) when the retainer (16) is snapped into place in the cap.

*FIG. 5*

EP 0 131 283 A2

PATENTANWÄLTE
DIPL. ING. R. HOLZER
DIPL. ING. (FH) W. GALLO
PHILIPPINE-WELSER-STRASSE 14
ZUGELASSENE VERTRETER VOR DEM
EUROPÄISCHEN PATENTAMT
PROFESSIONAL REPRESENTATIVES
BEFORE THE EUROPEAN PATENT OFFICE
MANDATAIRES AGRÉÉS PRÈS L'OFFICE
EUROPÉEN DES BREVETS
8900 AUGSBURG
TELEFON 0821/516475
TELEX 532302 PATOL D

- 1 -

## METHOD AND APPARATUS FOR ANCHORING OPTICAL CABLES TO OPTICAL CONNECTORS

This invention relates to optical cable connectors and more particularly to a method and apparatus for anchoring the optical cable to the connector.

In general an optical cable consists of an optical fiber and various other cable components which give strength and protection to the fiber. Typically, these other components include an outer plastic jacket within which is found one or more strength members.

The strength members contribute axial strength to the cable. The majority of optical cables utilize a high-modulus aramid fiber known as Kevlar 49 as the strength member. Other optical cables utilize a pair of steel wires embedded in the plastic outer jacket of the cable. When an optical cable is terminated by an optical connector, the strength member or members must be rigidly anchored to the connector body so that the axial force on the cable does not break the fiber within the connector.

As illustrated in US-A-3 871 744 in the past optical cables have been retained in the associated connector through the utilization of adhesive. This has been common practice in the early stages of the development of optical cables. However, for those cables which utilize strength members, US-A-4 047 797; 4 146 299; 4 168 109; 4 185 886; 4 279 466; 4 279 467; 4 283 125; 4 339 171; and 4 354 731 show systems for clamping the strength members to a portion of the connector housing. Some of the above mentioned patents utilize wedges, whereas others utilize retaining rings. Most importantly, those that fold back the strength members over another member either clamp the strength member at the folded over portion or provide a separate clamping donut or ring over the strength members.

US-A-4 008 948; 4 114 979; 4 178 068, 4 208 093; and 4 319 802 illustrate the utilization of crimping for securing the optical cable to the respective connector body.

In US-A-4 162 821 a connector body carries annular ribs which grip the outer casing of the optical fiber. In this patent the strands or strength members are allowed to float freely in the connector body as they are bent back away from the fiber. The connector body is then filled with epoxy securing the optical cables to the body.

Unlike the systems described in the above mentioned patents, in the subject invention the optical cable is secured to the connector body through the utilization of the strength members which are folded back over a retainer which is slipped over the optical cable once the end of the optical cable has been stripped away to expose the optical fiber and the strength members. The retainer is provided with longitudinally extending grooves into which the strength members are reverse bent. In one embodiment the depth of each groove is less than the diameter of the strength member such that when the retainer is snapped into a cap, the interior walls of the cap press the strength members into their respective channels where they are held by axial compression of the cap, the cap being sufficiently elastic for this purpose.

In one embodiment the interior wall of the cap carries one or more longitudinally extending ribs which are adapted to fit into one or more of the longitudinally running grooves in the retainer. If multiple ribs are used, the grooves are made deeper; and the ribs are used both to compress the strength members into the respective grooves and to prevent the retainer from rotating within the cap. If one rib is utilized it is adapted to ride in an unused channel or slot of the retainer to prevent the retainer from rotating within the cap.

In a further embodiment the outer surface of the retainer is provided with an outwardly directed annular lip whereas the distal end of the cap is provided with an inwardly directed annular lip. When the retainer is pressed into the cap the annular lip of the cap expands to accommodate the passage of the annular lip of retainer therethrough, after which point the annular lip on the cap springs back to secure the retainer in the cap.

The retainer and cap structure provide a so-called "back shell" so that single-fiber optical cables using two or more metallic wires as strength members can be anchored solidly and quickly with a minimum of tools and without the use of any adhesives which add inconvenience in curing time.

In addition to the back shell, the completed connector includes a ferrule into which the stripped and exposed optical fiber is inserted. In one embodiment a cable nut surrounds the ferrule and is utilized for securing the ferrule to an interconnect or active receptacle. At one end the ferrule carries a cylindrical shank having an external thread that permits the nut and ferrule sub-assembly to be screwed into the cap. The optical fiber having previously been provided with adhesive passes through the nut and ferrule sub-assembly through the center of the ferrule and extends outwardly from the ferrule tip. Thereafter the optical fiber is sealed to the tip, scribed and polished off at the tip of the ferrule.

As such, the optical connector is received by the user in four parts. The user strips the optical cable to expose the appropriate lengths of optical fiber and strength member wires. The cable is inserted into the retainer such that the fiber and wires come out through the small hole in the retainer's forward end. The wires are then bent manually backward into the grooves or slots in the outer surface of the retainer. The retainer with the cable in place is then inserted into the cap, with the relative dimensions of the retainer and cap being such that the strength member wires are pressed tightly into the retainer's grooves. In one embodiment, an internal detail of the cap and an external detail of the retainer cause the two parts to snap together and lock into a unit. These details include the detent structure formed by the aforementioned lips on the cap and retainer. Other details including the longitudinally running rib and an unused groove prevent relative rotation between the cap and the retainer. During installation, the retainer is rotated within the cap until the rib rides in the unused groove.

At this point in the procedure the optical cable is mechanically terminated by the retainer cap sub-assembly. The strength member wires are captured in the grooves, thus imparting the cable's full axial strength to the retainer-cap sub-assembly. At this point, the optical fiber is protruding with excess length out of the front end of the sub-assembly.

The second sub-assembly consisting of the ferrule and cable nut is introduced by threading the exposed optical fiber through the ferrule until it somes up through the hole in the forward tip of the ferrule. The screw-threaded rear portion of the ferrule is screwed into the internally threaded hole provided in the cap. The optical fiber is epoxied into the ferrule tip, the excess is cut off, and the ferrule tip and the fiber are then optically polished using conventional techniques.

The resulting assembly has the cable strength member wires rigidly locked into the rear portion or back shell of the connector and the optical fiber epoxied and polished within the tip of the ferrule.

Optionally, the ferrule-nut sub-assembly may be provided with a back post which, when the ferrule-nut assembly is screwed into the cap, projects into the central portion of the optical cable such that the jacket for the optical cable is sandwiched between the back post and the interior wall of the retainer for added strength.

The advantage of the present invention over the prior art is that the resulting connector assembly can be installed onto a suitable optical cable without cumbersome crimping tools and without the use of adhesives in the back shell which would add considerable inconvenience and time to the installation procedure.

It should be noted that the elastic cap/grooved-retainer combination operates by itself to provide improved cable retention. The snap action mounting and rotation prevention aid in the simplicity of the subject system and provide a convenient method of securing the retainer to the cap.

These and other features of the subject invention will be better understood in connection with the detailed description taken in conjunction with the drawings of which:

Fig. 1 is a diagrammatic illustration of a completed connector illustrating the retainer snapped into the cap, with the ferrule and cable nut having been screwed into the other end of the cap;

Fig. 2 is an exploded view of the connector of Fig. 1 illustrating the bending back of the strength members of the optical cable and the longitudinally running grooves in the retainer, with the cap also showing an internal rib for the alignment of the retainer with the cap;

Fig. 3 is a diagrammatic illustration of the forward end of the retainer illustrating the longitudinal grooves and the strength members in the form of wires bent back into the longitudinally running grooves within the retainer;

Fig. 4 is a diagrammatic illustration of the forward end of the retainer receiving twisted Kevlar braid material within the longitudinally running grooves;

Fig. 5 is a cross-sectional view of the completed connector of Fig. 1;

Fig. 6 is a cross-sectional illustration of the cap and back shell with an optical fiber cable positioned therein, showing that the depth of the grooves or slots in the retainer is less than the thickness or diameters of the strength members for the cable;

Fig. 7 is a cross-sectional diagram of another embodiment of the retainer cap sub-assembly in which the cap is provided with longitudinally running ribs which project into respective grooves in the retainer such that the ribs compress the strength members in the grooves against the bottoms of the grooves;

Figs. 8A, 8B and 8C illustrate the steps in the subject connector to an optical cable; and

Fig. 9 is a cross-sectional diagram of an embodiment of a completed connector illustrating the utilization of a back post.

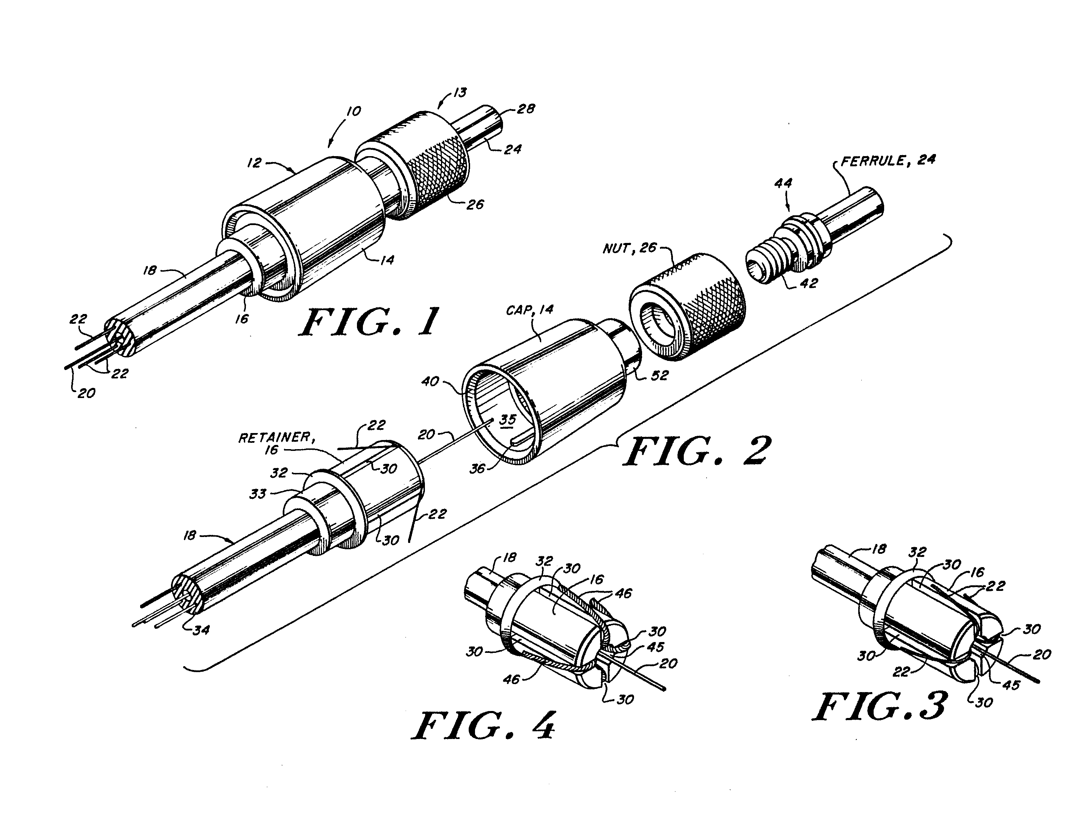

Referring now to Fig. 1, a connector 10 is illustrated as having a back shell 12 and a ferrule-nut sub-assembly 13. The back shell includes a cap 14 and a retainer 16 which is slipped over a fiber optical cable 18 which carries an optical fiber 20 and strength members 22. Sub-assembly 13 includes a ferrule 24 and a cable nut 26 surrounding the ferrule. The completed connector is adapted to mate with an interconnect for the mating of two optical fibers, or is adapted to mate with an active receptacle. For this purpose the tip 28 of ferrule 24 is inserted into a sleeve within the interconnect or active receptacle. Cable nut 26 is then screwed down over a mating assembly (not shwon) in order to connect the optical fiber of cable 18 to the appropriate optical fiber or active device.

Connector 10 is illustrated in an exploded view in Fig. 2 in which details of retainer 16 are illustrated. In this figure retainer 16 is cylindrical and is provided with a number of longitudinally running grooves 30 and an outwardly extending annular lip 32. An integral sleeve 33 extends from the distal end of the retainer and surrounds the outer jacket 34 of cable 18.

When cable 18 has had its forward end suitably stripped away so as to expose optical fiber 20 and strength members 22, the cable is inserted through the central channel of the retainer and the strength members 22 are bent backwardly into grooves 30 prior to the insertion of retainer 16 into cap 14. In one embodiment, cap 14 has a central cavity or channel 35 which is provided with at least one longitudinally running rib 36. When a single rib is used, this rib is positioned in an unused groove to lock retainer 16 against rotation within cap 14. Cap 14 is provided with an inwardly depending annular lip 40 at its distal end such that when the retainer is inserted into the distal end of cap 14 lip 32 initially expands lip 40 by camming action to permit the passage of lip 32 into the cap cavity. Thereafter lip 40 snaps back into place to prevent retainer 16 from coming out of cap 14.

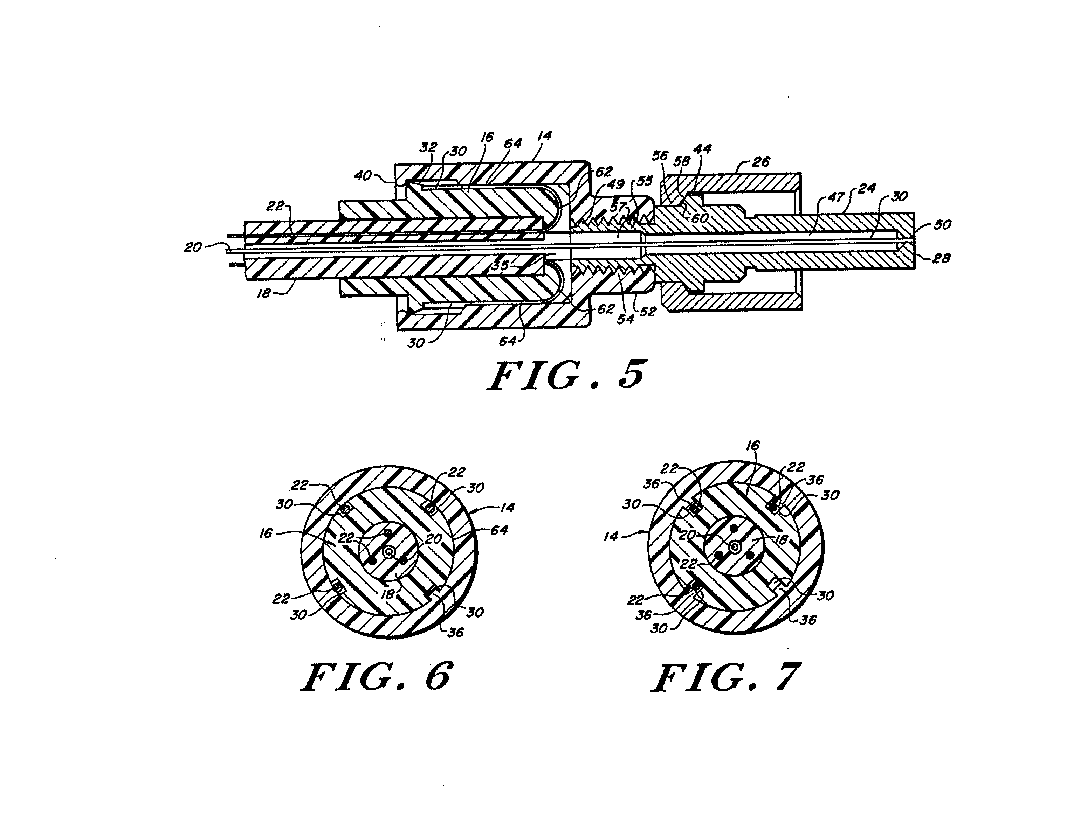

Ferrule 24 is provided with a screw threaded hollow shank 42 which, as will be described in connection with Fig. 5, is screwed into mating threads within cap nose section 52 to secure ferrule 24 to cap 14. Nut 26 is retained coaxially about ferrule 24 by a collar assembly 44, described more fully in connection with Fig. 5.

Referring now to Fig. 3, a diagrammatic view of retainer 16 is illustrated showing, four longitudinal grooves 30 displaced one from the other by 90 degrees, with the grooves extending into central channel 45 of retainer 16. Fiber 20 of cable 18 is shown extending from the forward portion of retainer 16, with strength members 22 in the form of wires being bent back into three of the four grooves supplied in the retainer. In the embodiment shown one groove in left unused, which accommodates rib 36 to prevent rotation of the retainer in cap 14 of Fig. 2.

Should the optical cable be provided with Kevlar sheathing, as illustrated in Fig. 4, this sheathing is spiraled or twisted into three strands here illustrated at 46, which strands are then bent back and positioned into respective grooves 30 in the same manner as the wires described in connection with Fig. 3.

Referring to Fig. 5, a cross-sectional diagram of the completed connector of Fig. 1 is illustrated in which like reference characters are utilized with respect to Figs. 1 to 5. In the completed connector, optical fiber 20 is threaded through a central channel 47 in ferrule 24 and is cemented into aperture 50 of ferrule tip 28. As decribed hereinbefore ferrule 24 is screw threaded into nose section 52 of cap 14 which has an internally threaded structure 54.

In one embodiment ferrule 24 carries a hollow shank 55 having a central channel 57 which communicates with central ferrule channel 47. External threads 49 are provided on the exterior of shank 55 to mate with threads of threaded structure 54 in nose section 52. When mounted, the central channels of the shaft and ferrule are aligned with the cap and retainer central channels along a single longitudinal axis.

Cap 26 is shown as having an inwardly depending end structure 56 having a slanted camming surface 58 which communicates with a slanted collar 60 of collar assembly 44.

As illustrated, retainer grooves 30 are radiused as illustrated at 62, with the strength members being bent about the radiused portions of the grooves. Each strength member is retained in its respective groove 30 by virtue of the action of cap 14 which is made of elastomeric material such that an inner wall 64 presses axially inwardly against the top portion of the strength member, thereby to compress the strength member in an axial direction within its respective longitudinal groove.

Referring to Fig. 6, inner wall 64 of cap 14 is shown pressing against the top surface of strength members 22 which are located in three of the four slots or grooves 30 in retainer 16. The grooves in retainer 16 are made such that the depth of each groove is less than the diameter of the associated strength member. Thus axial compressive forces are applied by cap 14 to compress the strength member in the respective groove. Rib 36 is illustrated in this embodiment as extending into an unused groove. Cable 18 is shown inserted into retainer 16, with optical fiber 20 and strength members 22 positioned as illustrated.

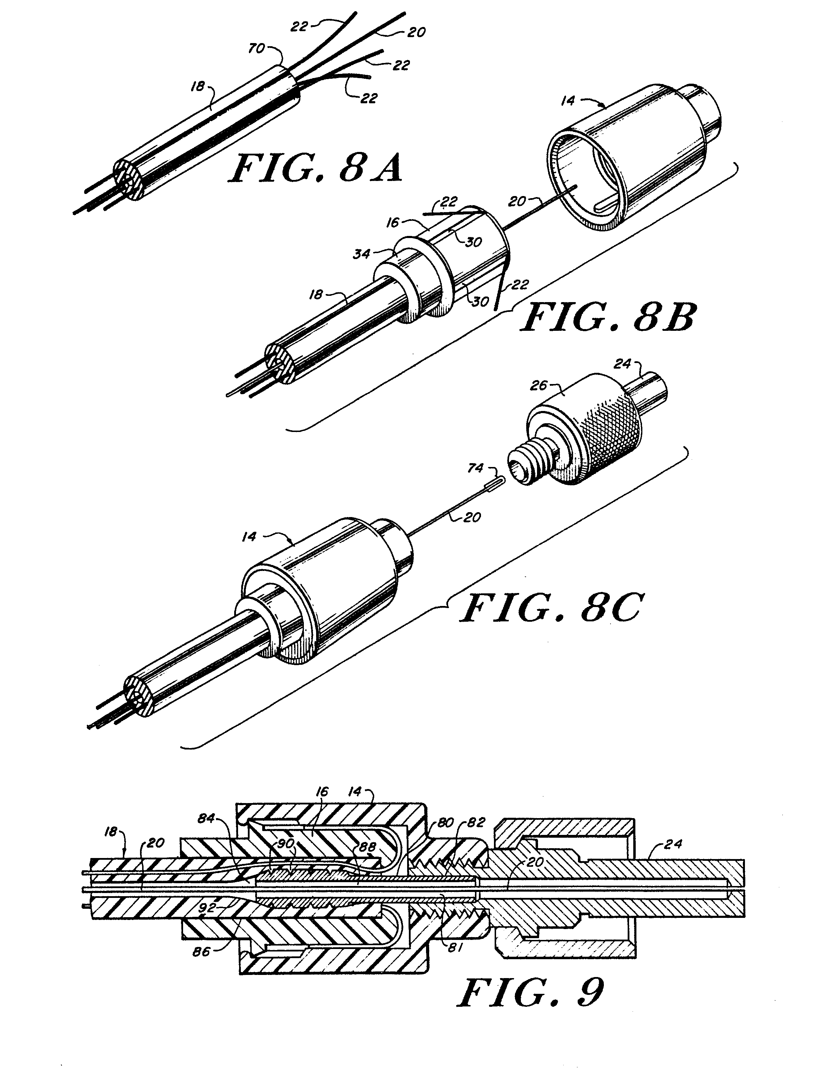

Referring to Fig. 7 in an alternative embodiment, cap cavity 35 may be provided with a number of longitudinally inward extending ridges 36 which extend into corresponding longitudinal grooves 30 of retainer 16. In this embodiment the depth of the grooves or channels in the retainer is deepened with respect to the depth of the grooves of Fig. 6 such that it is the ribs 36 of cap 14 which press against and provide axial inwardly directed forces on strength members 22. Again in this figure the optical fiber and strength members are positioned as illustrated.

Referring now to Fig. 8A, 8B and 8C, the installation of the subject connector onto an optical cable is illustrated. In Fig. 8A, the forward portion 70 of cable 18 is stripped back to expose strength members 22 and optical fiber 20. As illustrated in Fig. 8B, retainer 16 is slipped over the prepared cable such that optical fiber 20 extends from retainer 16. Strength members 22 are run backwardly into respective grooves 30. Thereafter cap 14 is snapped over retainer 16, with fiber 20 extending through the central channel of the cap. In one embodiment, sleeve 34 is in tight communication with the outside diameter of cable 18, and in this manner the retainer is installed over the exposed fiber and strength members. As illustrated in Fig. 8C, cable nut 26 is in place on ferrule 24 with optical fiber 20 having been provided with adhesive 74 at its tip. The completed nut-ferrule sub-assembly is then screwed into the cap such that the adhesive coated fiber tip passes through the central channels of the cap, the shank and the ferrule. The adhesive used may be a Tra-Con Model BA-F230 color keyed heat cured epoxy resin into which fiber 20 is dipped. It will be appreciated that when retainer 16 is inserted into cap 14, the cap is rotated to align the rib into the empty groove after which the retainer is pushed further in until the retainer is snapped into the cap.

In one embodiment, after completion of the connector, the fiber is scribed about 12 mm from the ferrule tip and is gently broken off. The ferrule is then placed into a heat curing tool to cure the epoxy thereby to cement the end of the fiber to the ferrule tip. The epoxy, in one embodiment, is cured for five minutes until the epoxy becomes amber in color. A scribing tool is utilized to scribe the fiber close to the epoxy bead and the protruding fiber is gently broken off. The connector is then installed onto a conventional polishing tool and 3M 8 inch PSA Imperial Lapping Films are provided. These films have 12, 3 and 1 micron oxide grits, with the films being provided on a smooth surface, preferably glass. Coarse polishing is performed utilizing the 12 micron film by moving the polishing tool in a gentle back and forth pattern while lubricating the film with water. Final polish is provided with the 3 microm and 1 micron films to produce a mirror-like finish.

Referring to Fig. 9, ferrule 24 may be provided with a hollow back post 80 which is press-fit into a counter bore 82 within ferrule 24. This back post extends longitudinally along the centerline of the ferrule and, when in position, is inserted in the space 84 between the jacket 86 of cable 18 and optical fiber 20. In this instance, the back post has a central channel 88 which accommodates optical fiber 20 therethrough. The distal end of back post 80 is provided with screw threads or other serrations 90 which are adapted to grip the interior surface 92 of the cable jacket as the ferrule is screwed into the cap. This compresses the jacket of the cable to the interior walls of the central channel of the retainer for added structural rigidity.

Having above indicated a preferred embodiment of the present invention, it will occur to those skilled in the art that modifications and alternatives can be practised within the spirit of the invention. It is accordingly intended to define the scope of the invention only as indicated in the following claims.

PATENTANWÄLTE
DIPL. ING. R. HOLZER
DIPL. ING. (FH) W. GALLO
PHILIPPINE·WELSER·STRASSE 14
ZUGELASSENE VERTRETER VOR DEM
EUROPÄISCHEN PATENTAMT
PROFESSIONAL REPRESENTATIVES
BEFORE THE EUROPEAN PATENT OFFICE
MANDATAIRES AGRÉÉS PRÈS L'OFFICE
EUROPÉEN DES BREVETS
8900 AUGSBURG
TELEFON 0821/516475
TELEX 532202 PATOL D

- 14 -

Claims:

1. A connector for optical cables having longitudinally running strength members, characterized by:

a cap (14) having an interior cavity (35);

a ferrule (24) having a tip (28) and a longitudinally running interior channel (47) communicating with said tip, said ferrule (24) being mounted to said cap (14) such that the cap cavity (35) and the ferrule channel (47) are in communication; and

a retainer (16) having an interior channel adapted to receive an optical cable (18) therethrough and longitudinally running grooves (30) in the exterior surface thereof, said grooves being adapted to receive folded back strength members (22) of said cable, said retainer (16) being adapted to be inserted into the cavity of said cap (14) and having a diameter such that the interior wall of said cap cavity (35) contacts the exterior surface of said retainer, said cap (14) being sufficiently elastic to permit passage of said retainer (16) therethrough.

2. A connector as claimed in claim 1, characterized in that said cap (14) is sufficiently elastic to compress said strength members (22) onto said retainer (16) so as to hold said retainer in a tight fit.

3. A connector as claimed in claims 1 or 2, characterized in that said cap (14) has a longitudinally running ridge (36) extending interiorly from the wall of said cavity and said cap has an annular inwardly projecting lip (40) at the distal end thereof; and that said retainer (16) has an annular outwardly projecting lip (32) on the exterior surface thereof, said cap being sufficiently elastic to permit passage of said retainer-carried lip (32) through said cap-carried lip (40).

4. A connector as claimed in any of claims 1 to 3 characterized in that said strength members (22) have a predetermined thickness and wherein said grooves (30) have a depth less than said thickness, whereby said strength members (22) are compressed into said grooves (30) by the interior cavity wall of said cap (14).

5. A connector as claimed in any of claims 1 to 4 characterized in that said strength members (22) have a predetermined thickness, wherein said cap (14) includes a number of inwardly projecting longitudinally running ribs (36) in said cap cavity (35), said ribs being positioned to fit into corresponding grooves (30); said grooves having a depth such that said strength members (22) are compressed in respective grooves (30) by the corresponding ribs (36).

6. A connector as claimed in any of claims 1 to 5 characterized in that said strength members (22) are made of wire.

7. A connector as claimed in any of claims 1 to 5 characterized in that said strength members (22) are made of Kevlar.

8. A connector as claimed in any of claims 1 to 7 characterized by further including a cable nut (26) carried by said ferrule (24).

9. A connector as claimed in any of claims 1 to 8 characterized in that said ferrule (24) includes an exteriorly threaded (49) shank (55) extending from the end of said ferrule removed from said tip (28), said shank having an interior channel (57), and wherein said cap (14) has a nose section (52) at the proximal end thereof, said nose section (52) having an interior channel therethrough provided with mating threads (54), whereby said ferrule (24) can be screwed into said cap (14).

10. A connector as claimed in any of claims 1 to 9 characterized in that said cable (18) has a sheath and an optical fiber (20) therein, and wherein said ferrule (24) includes a back post (86) having an interior channel (88) therethrough, said back post (80) extending away from said tip (28), and having exterior serrations (90) at the free end thereof, said post being of a size to fit between the optical fiber carried by said optical cable (18) and the sheath of said cable.

11. A method of securing an optical cable (18) to a connector in which the cable has a sheath (34), an optical fiber (20) carried within the sheath, and longitudinally running strength members (22), and in which the connector has a ferrule (24) extending from one end and a resilient cap (14) at the other end, characterized by the steps of:

stripping the sheath (34) of the cable (18) back to expose the optical fiber (20) therein and to expose the strength members (22);

slipping an interiorly channeled retainer (16) over the cable (18) such that the exposed strength members (22) and optical fiber (20) project from one end of the retainer, the retainer (16) having a number of longitudinally running grooves (30) in the exterior surface thereof;

bending the strength members (22) back into respective grooves (30);

inserting the retainer (16) into the cap (14) carried by the connector with the optical fiber (20) projecting forwardly and with the strength members (22) in the grooves (30) such that the optical fiber is threaded through the ferrule (24) carried by the connector, the cap (14) being tight fitting to compress the strength members (22) into the grooves (30); and

terminating the optical fiber (20) in the ferrule (24).

FIG. 1

FIG. 2

FERRULE, 24

NUT, 26

CAP, 14

RETAINER, 16

FIG. 3

FIG. 4

1/3

0131283

FIG. 5

FIG. 6

FIG. 7

*FIG. 8A*

*FIG. 8B*

*FIG. 8C*

*FIG. 9*